# EUROPEAN PATENT SPECIFICATION

(11) **EP 4 377 640 B1**
(45) Date of publication and mention of the grant of the patent: **04.03.2026**
(21) Application number: 22741290.5
(22) Date of filing: 11.07.2022
(51) Int. Cl.: G01F 1/66, F24F 11/00, F24F 11/38, F24F 11/49, F24F 11/63

(54) **METHOD AND SYSTEM FOR PREDICTIVE MAINTENANCE OF AN ULTRASONIC SENSOR FOR HVAC SYSTEMS**
VERFAHREN UND SYSTEM ZUR VORAUSSCHAUENDEN WARTUNG EINES ULTRASCHALLSENSORS FÜR HVAC-SYSTEME
PROCÉDÉ ET SYSTÈME DE MAINTENANCE PRÉVENTIVE D'UN CAPTEUR À ULTRASONS POUR SYSTÈMES HVAC

(30) Priority: 27.07.2021 CH 0701012021
(43) Date of publication of application: 05.06.2024
(73) Proprietor: Belimo Holding AG, 8340 Hinwil (CH)
(72) Inventor: REISSNER, Patrick, 8704 Herrliberg (CH); BUCHMANN, Lucien, 8640 Rapperswil (CH)
(74) Representative: Rentsch Partner AG
(86) International application number: PCT/EP2022/069272
(87) International publication number: WO 2023/006399

(56) References cited:
- WO-A1-2017/167389
- WO-A1-2018/116071
- DE-A1- 10 118 934

## Description

### Field of the Invention

The present invention relates to a method for predictive maintenance of an ultrasonic sensor and/or ventilation system and to a system, in particular sensor and computer program product, for performing the method. In particular, it relates to predictive maintenance of ultrasonic sensors preferably used in heating, ventilation and air conditioning (HVAC) systems.

### Background

The use of ultrasonic sensors and ultrasonic flowmeters in an HVAC (heating, ventilation and air/conditioning) systems has grown significantly due to their many beneficial features such as high accuracy, non-intrusive nature and lack of moving parts. WO 2010/122117 discloses a system comprising ultrasonic sensors, and in particular it describes a ventilation system which draws air from an exterior of a building through a ventilation duct into an interior of the building. The ventilation system has an ultrasonic sensor positioned in the ventilation duct upstream and/or downstream of the ventilator for measuring the volume flow or air velocity. The ultrasonic sensor of WO 2010/122117 comprises a pair of ultrasonic transceivers which are mounted in a spaced apart relationship facing each other on opposing surfaces of the ventilation duct, emitting and receiving ultrasonic waves in an angle between 60-90 degrees relative to the surface of the ventilation duct in upstream and downstream direction. In a controller, the phase difference and time-of-flight difference between the transmitted and received ultrasonic signals in upstream and downstream direction are determined and used to calculate the velocity and temperature of the air and to control these parameters by a controller that communicates with a valve to regulate the temperature and velocity of the airflow and to control the fan speed and temperature of the ventilation unit by communication through the control box on the valve.

To assure proper operation, ultrasonic sensors need regular maintenance and diagnostics. Typically, the maintenance is performed on a regular basis regardless of the state of the sensors. To assure that ultrasonic sensors are still in acceptable state, the maintenance is performed well in advance based on the standard prediction value which is based on the sensor specifications. This kind of maintenance produces additional costs and time delays since the maintenance is performed more often than needed.

Maintenance of ultrasonic sensors is not the only problem to be solved. Rather, the ultrasonic sensors still continue functioning with rather large amounts of dust deposited thereon. However, dust or other debris can accumulate in the ventilation system and ventilation ducts, which can become a hygenic problem and a fire safety issue. Therefore, duct cleaning is recommended typically on a fixed time basis, such as every few years. However, real contamination is very dependent on the usage of the room or building which is ventilated by the ventilation or HVAC system.

For above mentioned reasons, there is still a need for new and improved methods and systems for predictive maintenance and diagnostics of ultrasonic sensors and ventilation systems as a whole.

### Summary

Therefore, it is an object of the present disclosure to propose a method and system for predictive maintenance of an ultrasonic sensor configured to be used in a ventilation system, in particular HVAC systems, and/or for predictive maintenance of the ventilation system, in particular HVAC system, comprising the ultrasonic sensor.
to regulate the temperature and velocity of the airflow and to control the fan speed and temperature of the ventilation unit by communication through the control box on the valve.

To assure proper operation, ultrasonic sensors need regular maintenance and diagnostics. Typically, the maintenance is performed on a regular basis regardless of the state of the sensors. To assure that ultrasonic sensors are still in acceptable state, the maintenance is performed well in advance based on the standard prediction value which is based on the sensor specifications. This kind of maintenance produces additional costs and time delays since the maintenance is performed more often than needed.

Maintenance of ultrasonic sensors is not the only problem to be solved. Rather, the ultrasonic sensors still continue functioning with rather large amounts of dust deposited thereon. However, dust or other debris can accumulate in the ventilation system and ventilation ducts, which can become a hygenic problem and a fire safety issue. Therefore, duct cleaning is recommended typically on a fixed time basis, such as every few years. However, real contamination is very dependent on the usage of the room or building which is ventilated by the ventilation or HVAC system.

For above mentioned reasons, there is still a need for new and improved methods and systems for predictive maintenance and diagnostics of ultrasonic sensors and ventilation systems as a whole.

WO2017/1 67389A1 discloses a method for monitoring an ultrasonic flowmeter and an ultrasonic flowmeter adapted to perform the method. A reference fingerprint comprising initial system parameters of the flowmeter is generated in a production or calibration stage and can be compared with currently measured system parameters, when the ultrasonic flowmeter is in use. Such reference fingerprints allow to detect, if an overall sensor geometry constant K or measurement circuits for measuring time difference and temperature have changed over time and to diagnose possible flowmeter inaccuracies. During operation, when the difference between a pair of an initial system parameter and a current system parameter passes a predetermined threshold, an alarm is sent by the ultrasonic flowmeter 1 via a network connection in order to initiate maintenance upon request.

### Summary

Therefore, it is an object of the present disclosure to propose a method and system for predictive maintenance of an ultrasonic sensor configured to be used in a ventilation system, in particular HVAC systems, and/or for predictive maintenance of the ventilation system, in particular HVAC system, comprising the ultrasonic sensor.

According to the present disclosure, this object is achieved by the features of the independent claims. Moreover, further advantageous embodiments emerge from the dependent claims and claim combinations, the description and drawings.

A method for predictive maintenance of a system for ventilation, in particular ventilation system or HVAC (heating, ventilation, and air-conditioning) system, comprising an ultrasonic sensor and/or for predictive maintenance of an ultrasonic flowmeter assembly comprising the ultrasonic sensor configured to be used in the system for ventilation or ventilation system, is proposed. The ultrasonic sensor comprises: at least one ultrasonic transducer configured to measure ultrasonic signals as a function of time during an operation of the HVAC system and to produce raw electronic signals as a function of time. The method comprises the method elements of: (a) deriving a signal parameter based on the raw electronic signals; (b) creating a set of data comprising the signal parameter as a function of time; selecting at least one limit parameter; and estimating a time limit based on the set of data, wherein the time limit is a time when the signal parameter is predicted to reach the limit parameter.

In embodiments, in step (a) the deriving the signal parameter comprises extracting the signal parameter from the raw electronic signals or from electronic signals processed therefrom, in particular amplified and/or filtered electronic signals.

The following embodiments include modifications, improvements and/or variations of the method for predictive maintenance of the or ventilation system and/or ultrasonic flowmeter assembly, in particular ultrasonic sensor.

In an embodiment, the ultrasonic signal is emitted by the ultrasonic transducer and/or by a second ultrasonic transducer, and the ultrasonic signals are reflected at least once before being measured by the ultrasonic transducer.

In an embodiment, the ultrasonic signals are transferred via at least two different reflection paths. In a variation of this embodiment, the steps of the method (a)-(d) are performed separately for each of the reflection paths.

In an embodiment, the signal parameter is an amplitude of the raw electronic signal.

In an embodiment, the method comprises the step of amplifying the raw electronic signals by applying a gain factor to produce amplified electronic signals as a function of time, wherein the gain factors are adapted to provide an amplification of the raw electronic signals such that the amplified electronic signals exceed a given minimum threshold value, and wherein the signal parameter is or corresponds to the gain factor and the limit parameter is or corresponds to a gain factor limit.

In an embodiment, the sensor comprises a signal processing unit, in particular processor, configured to process, e.g. filter the raw electronic signals and/or to amplify the raw electronic signals by applying the gain factor to produce the amplified electronic signals as a function of time.

In an embodiment, the limit parameter is determined such that a required e.g. predetermined minimum signal to noise ratio of the raw electronic signal is not underrun; and/or wherein the gain factor limit is determined such that a required e.g. predetermined minimum signal to noise ratio of the amplified electronic signal is not underrun.

In an embodiment, the method is further comprising in step (b) a step of selecting an initial signal parameter corresponding to a specified or a predetermined value of the raw electronic signal. Alternatively, or in addition, the method may comprise in step (b) a step of selecting an initial gain factor corresponding to a specified or a predetermined value of the amplified electronic signal.

In an embodiment, the initial signal parameter and/or the initial gain factor is or are determined during a calibration or start-up procedure; and/or the set of data comprises at least two data pairs.

In an embodiment, the method comprises a step of creating a signal parameter time curve using the set of data. In a variation of this embodiment, the signal parameter time curve is obtained by a step of interpolating the set of data.

In an embodiment, the method comprises a step of extrapolating the signal parameter time curve and determining the time limit from an intersection between the extrapolated signal parameter time curve and a limit parameter threshold value or usually constant threshold curve. In another embodiment, the extrapolation is based on a subset of the set of data.

In an embodiment, the extrapolation is performed on a part of the signal parameter time curve bounded by a lower calculation limit and an upper calculation limit of the signal parameter.

In an embodiment, the step of interpolating is performed repeatedly or stepwise when the signal parameter reaches a subsequent lower or a subsequent upper calculation limit.

In an embodiments, a series of calculation limits is selected such that a distance between subsequent calculation limits is monotonously decreasing, in particular when approaching the limit parameter and/or an alarm threshold.

In an embodiment, the signal parameter time curve and/or the interpolation and/or the extrapolation is linear or stepwise linear or non-linear.

In embodiments, measurement time intervals are selected to be in a range from one month to several years.

In an embodiment, at least one of the raw electronic signals is obtained as an average over a plurality of measurements, or at least one of the raw electronic signals is obtained by signal processing, in particular in the signal processing unit.

In an embodiment, the method is further comprising a step of raising an alarm when the signal parameter reaches the limit parameter.

In an embodiment, the method further comprises the step of setting an alarm threshold for the signal parameter smaller or larger than the limit parameter and raising an alarm when the signal parameter reaches the alarm threshold.

In further embodiments, the limit parameter and/or the alarm threshold is determined such that a threshold amplitude of the raw electronic signals, which is indicative of a maximal allowable dirt accumulation in the system for ventilation, is not underrun; and/or wherein the gain factor limit and/or the alarm threshold is determined such that a threshold amplitude of the amplified electronic signals, which is indicative of a maximal allowable dirt accumulation in the system of ventilation, is not underrun. Herein, dirt may comprise dust, debris, or contamination of any kind, which can degrade the performance of the ultrasonic sensor.

In embodiments thereof, the maximal allowable dirt accumulation in the system for ventilation corresponds to a corresponding (e.g. predetermined) dirt accumulation on the ultrasonic transducer(s) and/or on reflection points or surfaces of the conduit, which causes a detectable reduction in amplitude of the raw electronic signals until these reach their threshold amplitude. Alternatively or in addition, the maximal allowable dirt accumulation in the system for ventilation corresponds to a corresponding (e.g. predetermined) dirt accumulation on the ultrasonic transducer(s) and/or on reflection points or surfaces of the conduit, which causes an increase in gain factors used for providing the amplified electronic signals until the gain factors reach their threshold amplitude.

For example, the maximal allowable dirt accumulation in the system of ventilation may be chosen according to hygenic requirements or recommendations. Thus, the maximal allowable dirt accumulation may be a hygenic maximal allowable dirt accumulation, and the limit parameter may be a hygenic limit parameter and/or the alarm threshold may be a hygenic alarm threshold.

Alternatively or in addition, the maximal allowable dirt accumulation in the system of ventilation may be chosen according to fire safety requirements or recommendations. Thus, the maximal allowable dirt accumulation may be a fire safety maximal allowable dirt accumulation, and the limit parameter may be a fire safety limit parameter and/or the alarm threshold may be a fire safety alarm threshold.

The advantage of such hygenic or fire safety limit parameter or alarm threshold is that an even earlier motivation for cleaning the ventilation system, in particular the ventilation ducts and/or ultrasonic transducer(s), is given. This allows for optimal system maintenance.

Alternatively or in addition, the limit parameter is a sensor maintenance limit parameter and/or the alarm threshold is a sensor maintenance alarm threshold. This has the advantage that cleaning of the ultrasonic transducers and/or the ventilation system, in particular the ventilation ducts, can be postponed to an instant in time when malfunctioning of the ultrasonic sensor would start. This allows for optimal sensor maintenance.

In an embodiment, the sensor is an ultrasonic sensor for measuring a flow and/or temperature of a fluid through a channel.

In an embodiment, the method serves for detecting malfunctioning of the ultrasonic sensor, in particular signal fading due to accumulation of dust or debris on at least one of the ultrasonic transducer(s) and/or on at least one reflection point or reflection surface of the conduit.

In an embodiment, the ultrasonic signals from ultrasonic transducers providing reduced raw electronic signals or requiring increased gain factors compared to other ultrasonic transducers are used with less weight or are neglected, e.g. when determining the flow and/or temperature of the fluid through the channel.

In one embodiment, the sensor comprises at least two ultrasonic transducers that are fixed to a channel section and are arranged at a distance from each other along the channel section, in particular wherein the channel section comprises at least one reflector for providing a reflection path for one or between two of the ultrasonic transducers.

A further aspect of the invention is related to a computer program product comprising instructions which, when the program is executed by a computer, cause the computer to carry out the steps of the method as disclosed herein.

Another aspect of the invention is related to a sensor comprising: an ultrasonic transducer configured to measure ultrasonic signals as a function of time and to produce raw electronic signals as a function of time; and a signal processing unit or processor configured to process the raw electronic signals and/or to amplify the electronic signals by applying a gain factor to produce amplified electronic signals as a function of time, wherein the sensor is configured to perform the method for predictive maintenance disclosed herein.

### Brief Description of the Drawings

The present invention will be explained in more detail, by way of non-limiting examples, with reference to the schematic drawings in which:
- Fig. 1a: shows a schematic illustration of an ultrasonic sensor in accordance with an embodiment;
- Fig. 1b: shows a schematic illustration of an ultrasonic sensor in accordance with an embodiment;
- Fig. 2: show an illustration of ultrasonic signal waveforms detected by the ultrasonic sensor in accordance with an embodiment;
- Fig. 3: shows a schematic illustration of an ultrasonic sensor in accordance with an embodiment;
- Fig. 4a: shows in lateral cross-sectional view (on the left) and cross-sectional view (on the right) orthogonal to flow direction an ultrasonic flowmeter assembly designed for measuring a flow and/or temperature of a fluid through a round channel and/or for measuring a channel dimension by using an I-shaped path of ultrasonic transmission in accordance with embodiments of the invention;
- Fig. 4b: shows in lateral cross-sectional view (on the left) and cross-sectional view (on the right) orthogonal to flow direction an ultrasonic flowmeter assembly designed for measuring a flow and/or temperature of a fluid through a round channel by using a V-shaped path of ultrasonic transmission in accordance with embodiments of the invention;
- Fig. 5: shows a schematic illustration of one example of a graph of a signal parameter as a function of measurement time in accordance with an embodiment;
- Fig. 6: shows a schematic illustration of one example of a graph of an applied gain as a function of measurement time in accordance with an embodiment;
- Fig. 7: shows a schematic illustration of one example of a graph of an applied gain as a function of measurement time and having a plurality of calculation limits in accordance with an embodiment.

### Detailed Description

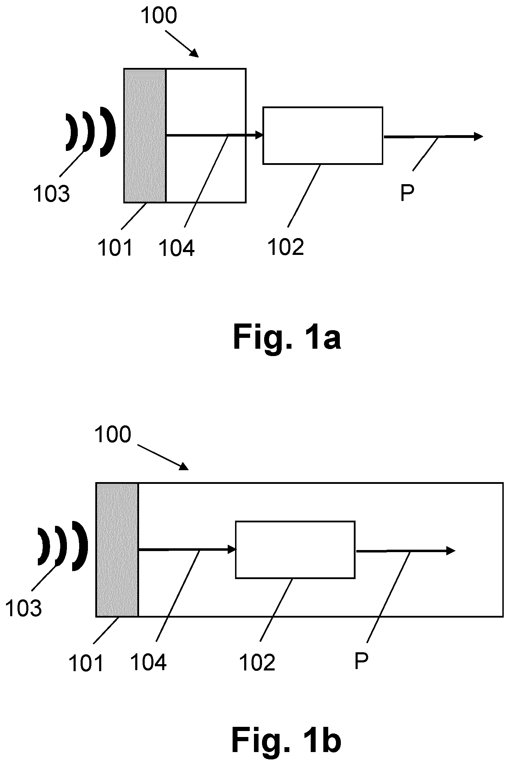

Fig.1a shows a schematic representation of an exemplary embodiments of an ultrasonic sensor 100 preferably configured to be used in a ventilation or HVAC system. The sensor comprises a transducer 101 configured to measure ultrasonic signals 103 as a function of time during an operation of the HVAC system. In one embodiment the ultrasonic signal 103 is reflected at least once from a reflective surface before reaching the transducer 101. The reflective surface may be part of the HVAC system such as a pipe or a channel. The ultrasonic transducer 101 is configured to produce raw electronic signals 104 after receiving the ultrasonic signals 103.

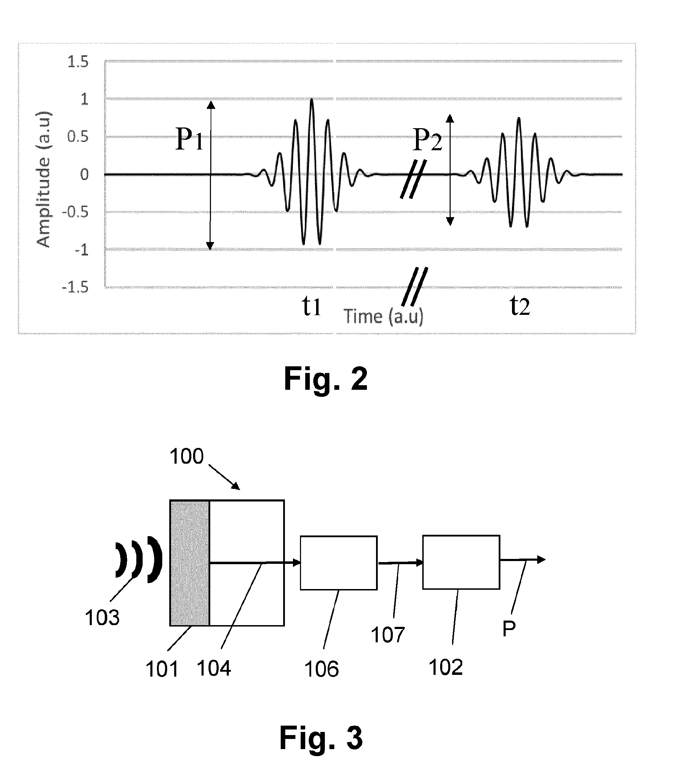

Still referring to Fig. 1a, the raw electronic signals 104 may be filtered or conditioned inside or outside the ultrasonic sensor 100 either digitally or by hardware or by both. The raw electronic signals 104 are further sent to a signal processing unit 102 or processor 102, which outputs a signal parameter P based on the input raw electronic signals 104. The signal processing unit 102 may be outside the ultrasonic sensor 100 as shown in Fig. 1a, or it may be an integral part of the ultrasonic sensor 100 as shown in an embodiment in Fig. 1b. The signal processing unit 102 may be a microcontroller, an application-specific integrated circuit (ASIC) or any other appropriate device that is configured to process electronic signals 104 and to output a characteristic signal parameter P (briefly signal parameter) as disclosed herein. In particular, the signal parameter P can be extracted from the raw electronic signals 104 (Fig. 1a, 1b) or from the amplified and/or filtered electronic signal 107 (Fig. 3). For example, the signal parameter P can be an amplitude of the raw electronic signal 104 (Fig. 1a, 1b) or a gain factor g applied to obtain the amplified signal 107 (Fig. 3).

Fig. 2 shows a schematic representation of two raw electronic signals 104 received at the transducer 101 at two different instants of time, t1 and t2. The raw electronic signals 104 are shown as waveforms having a specific shape, frequency and amplitude among other characteristics. The raw electronic signal 104 may be a voltage generated by the ultrasonic transducer 101. From the signal waveforms, it is possible to extract signal parameters P, and in this particular case, the signal parameters P1 and P2 at time t1 and t2 respectively.

The extraction of the signal parameter(s) may be done by the signal processing unit or processor 102. In the embodiment shown in Fig. 2, the signal parameter P is an amplitude of the waveforms, herein e.g. maximum peak-to-peak amplitude.

Depending on the different conditions, the amplitudes of the raw electronic signals 104 may change as a function of time, which causes the signal parameter P to change its value from P1 at the time t1 to P2 at the time t2. A set of data (Pi, ti) comprising the signal parameter P as a function of time may be created, stored and/or processed. For the example of Fig. 2, the set of data would be: (P1, t1), (P2, t2).

In another embodiment shown in Fig. 3, the raw electronic signal 104 is amplified by an amplifier 106 to produce an amplified electronic signal 107. The amplifier 106 may be a part of the ultrasonic sensor 100 or the signal processing unit or processor 102, or it might be a separate device. The amplifier 106 applies a gain factor g to produce the amplified electronic signals 107 as a function of time. The gain factors are adapted to provide an amplification of the raw electronic signals 104 such that the amplified electronic signals 107 exceed a given minimum threshold value. In this embodiment, the characteristic signal parameter P of the raw electronic signal 104 corresponds to the applied gain factor g. The set of data (gi, ti) may be created comprising applied gain factors as a function of time.

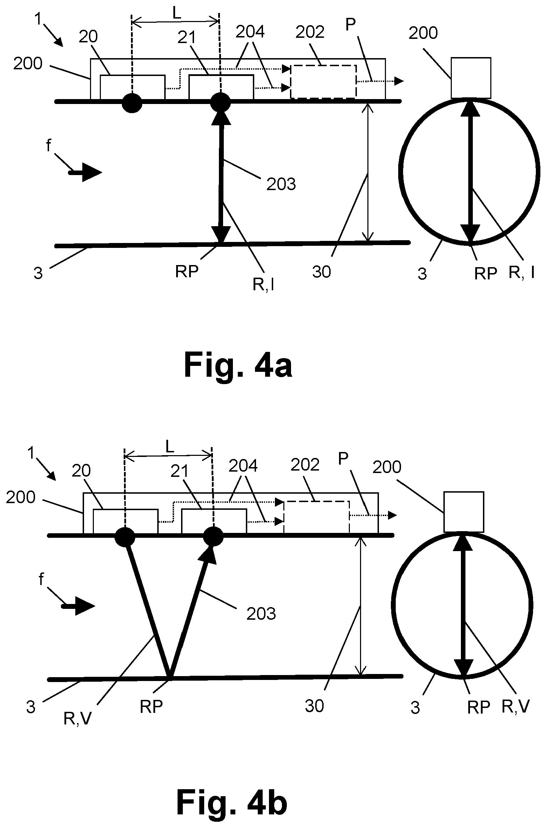

Fig. 4a. and 4b show the embodiments in which the ultrasonic transducers 20, 21 are part of the ultrasonic sensor 200, which is a component of a flowmeter assembly 1 designed for measuring a flow and/or temperature of a fluid through a channel. The ultrasonic flowmeter assembly 1 may be preassembled and configured to be attached to the channel having a flow direction f through the channel, or the ultrasonic sensor 200 may be attached to the existing conduit 3 at a site of operation. The conduit 3 may be an integral part of a larger system such as an HVAC system, and it may have different cross section profiles such as, but not limited to, circular or rectangular. The flowmeter assembly 1 may have a plurality of the ultrasonic sensors 100, 200, and preferably two ultrasonic sensors 20 and 21 as shown in Fig. 4a and Fig. 4b.

Referring to Fig. 4a, the at least one ultrasonic transducer 20, 21 is configured to emit ultrasonic pulses into the conduit 3 and to receive ultrasonic pulses after having travelled along at least one path R in the conduit section 3 and to output measurement data in a form of the raw electronic signals 204 to the processor 202, wherein the ultrasonic transducers 20, 21 can be 101 and the signal processing unit 202 can be 102 as shown in Fig. 1a, 1b, and Fig. 3. The ultrasonic transducers 20, 21 may be operating in a range of 20 kHz to 400 kHz and preferably at 40 kHz. The ultrasonic transducers 20, 21 preferably have a broad emission characteristic (or emission angle) and/or receiving characteristic (or receiving angle) to allow measurement and assessment of a plurality of ultrasonic signal paths. The paths can be or comprise reflective paths R which include one or more reflection points RP or reflecting areas RP or reflection surfaces RP. Alternatively, or in addition, the ultrasonic signal paths can also be or comprise direct paths (not shown).

In the embodiment of Fig. 4a the reflection path R is a double pass I-shaped path, which is characterized in that the ultrasonic pulses emitted by the ultrasonic transducer 21 are reflected back to the ultrasonic transducer 21. The path R may preferably be chosen to lie in a plane orthogonal to the flow direction f or a longitudinal axis of the conduit 3. In the double pass I-shaped path, the ultrasonic pulse is reflected once at a reflection point RP or a reflection area RP or a reflection surface RP.

In embodiment of Fig. 4b, the reflective path R is a V-shaped path V, which may be in both directions i.e. from the first transducer 20 to the second transducer 21 and in the opposite direction. The V-shaped path has one reflection point or area or surface RP on the conduit 3. In other words, the first V-path and the second path V-path are congruent, i.e. are identical in shape and counter-directional to one another. Differently shaped first paths and/or differently shaped second paths may also be used separately or in combination.

Various environmental and working conditions may influence the operation of the transducers 101; 20, 21 of the ultrasonic sensors 100, 200. One of the common causes for non-optimal performance or even failure of the ultrasonic sensors 100, 200 is accumulation of dirt and/or dust on the emission and/or receiving surface of the transducers 101; 20, 21. This change in the performance requires monitoring and maintenance of the ultrasonic sensors, and in addition it can be used to monitor dirt accumulation in the ventilation system, in particular in the ventilation ducts, and to predict time instances or time intervals for maintenance actions of the ventilation system, such as cleaning of ventilation ducts 3 and/or of the ultrasonic transducers 101; 20, 21.

When dust accumulates on top of the transducers or on reflection points or areas or surfaces RP of the conduit or elsewhere inside the conduit, the ultrasonic signal is damped up to a point where the gain saturates or the amplitude decreases. With further dust accumulation, the electronic signal becomes so small that the signal to noise ratio becomes too small for a reliable measurement. At this point, the ultrasonic sensor is not able to function properly, and it should be serviced and cleaned.

According to the invention, the method for predictive maintenance of an ultrasonic sensor 100, 200 configured to be used in an HVAC system comprises the following steps:
(a) deriving a signal parameter P based on the raw electronic signals 104, in particular extracting the signal parameter P from the raw electronic signals 104 or the amplified signals 107;
(b) creating a set of data (Pi, ti) comprising the signal parameter P as a function of time;
(c) selecting at least one limit parameter (PL);
(d) estimating a time limit (tL) based on the set of data (Pi, ti), wherein the time limit (tL) is a time when the signal parameter (P) is predicted to reach the limit parameter (PL).

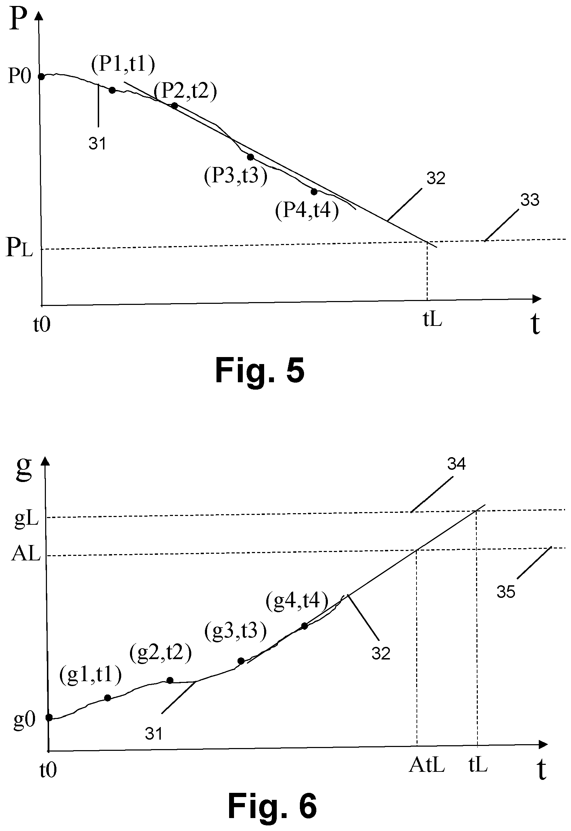

The method may be further explained referring to Fig. 5-7. Fig. 5 shows evolution of the extracted signal parameter P as a function of time. The set of data (Pi, ti) has been created and plotted in Fig. 5. An initial signal parameter P0 corresponds to a specified or a predetermined value of the raw electronic signal 104, and it may be selected as a starting point of the set of data at time t0. The initial signal parameter P0 may be determined during a calibration or start-up procedure. While Fig. 5 shows four data pairs for illustration purpose, the set of data (Pi, ti) in general comprises at least two data pairs (P1, t1) and (P2, t2), and it may comprise hundreds or thousands or more data pairs over shorter or longer period of time, and sometimes over the range of few years. Time difference between points in the set of data may be constant or may vary in a non-regular fashion. In one preferred embodiment, the frequency of data point measurement increases with the time t.

The limit parameter PL shown in Fig. 5 may be determined such that a required (e.g. predetermined) minimum signal to noise ratio of the raw electronic signal 104 is not undershot. In one preferred embodiment, the signal parameter P is an amplitude of the electronic signal waveform. While estimating a time limit tL, when the signal parameter P is predicted to reach the limit parameter PL, may be based directly on the set of data (Pi, ti) according to the invention, the preferred embodiment comprises creation of a signal parameter time curve 31 by using the set of data (Pi, ti). The signal parameter time curve 31 may be obtained by a step of interpolating the set of data (Pi, ti). In one preferred embodiment, the interpolation is linear or stepwise linear, but other types of interpolations may also be used, e.g. non-linear interpolation.

In preferred embodiments, the signal parameter time curve 31 is further extrapolated to obtain an extrapolated signal parameter time curve 32. Determination of the time limit tL, i.e. when the signal parameter P is predicted to reach the limit parameter PL, is achieved from an intersection between the extrapolated signal parameter time curve 32 and a limit parameter threshold value PL, which can be represented by a constant limit parameter threshold curve 33 over the relevant measurement time window. When the time or time interval, when the signal parameter P is predicted to reach the limit parameter PL, has been determined, it can be output to the user for scheduling maintenance, e.g. cleaning, of the ventilation system and/or flowmeter assembly 1, in particular ultrasonic sensor 100, 200 and/or ultrasonic transducers 101; 20, 21.

Fig. 6 shows an embodiment in which the signal parameter P is an amplification gain factor g, and the limit parameter PL is a gain factor limit gL. The set of data (gi, ti) has been created and plotted in Fig. 6, and the gain time curve 31 has been obtained by a step of interpolating the set of data (gi, ti). In the preferred embodiment the gain time curve 31 is further extrapolated to obtain an extrapolated gain time curve 32. Determination of the time limit tL is achieved from an intersection between the extrapolated gain time curve 32 and a gain threshold value 34, represented by a constant threshold curve 34.

Both in Fig. 5 and Fig. 6, the interpolation and extrapolation of signal parameter time curves may be done on a subset of the set of data (Pi, ti) or (gi, ti), for example by using only points (P2, t2), (P3, t3) and (P4, t4). The decision regarding the choice of points may be predetermined or based on the decision of the operator, for example.

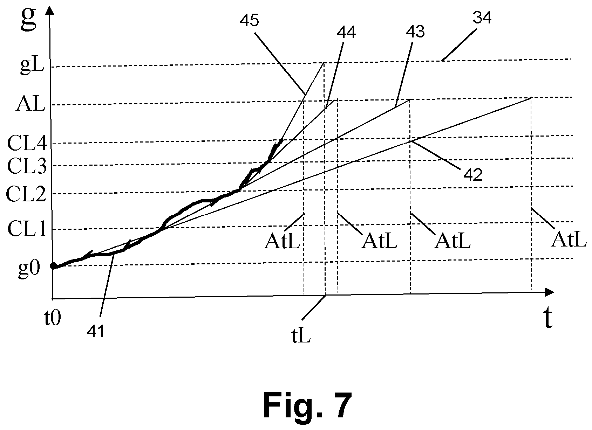

Fig. 7 shows yet another example of the evolution of the applied gain g as a function of time t. In addition to the initial gain factor curve characterized by gain factor g0 (i.e. constant curve through g0) and in addition to the gain limit curve characterized by the gain factor limit gL (i.e. constant gain factor limit curve 34 through gL) there are several calculation limits CL1, CL2, CL3, CL4 positioned between the initial gain factor curve g0 and the gain factor limit curve 34. In one preferred embodiment, the extrapolation is performed on a part of the signal parameter time curve 41, here gain factor time curve 41, bounded by a lower calculation limit CL1, CL2, CL3 and an upper calculation limit CL2, CL3, CL4. In one embodiment the step of interpolating is performed repeatedly or stepwise, when the gain factor reaches a subsequent lower or a subsequent upper calculation limit CL1, CL2, CL3, CL4. As shown in Fig. 7 the same gain factor time curve 41 may have different extrapolation curves 42, 43, 44, 45 depending on the time interval of the gain factor time curve 41 on which the extrapolation is performed. Different calculation limits may be set as a function of the use of the ultrasonic sensor.

In embodiments, a series of calculation limits CL1, CL2, CL3, CL4 is selected such that a distance between subsequent calculation limits CL1, CL2; CL2, CL3; CL3, CL4 is monotonously decreasing, in particular when approaching the limit parameter PL and/or an alarm threshold AL. This has the advantage that an accelerated increase in the signal parameter time curve 41, here gain factor time curve 41, can be monitored more closely and the precision of predicting a time or time interval for maintenance, e.g. cleaning, of the ventilation system or flowmeter assembly 1 or ultrasonic sensor 100, 200 or ultrasonic transducers 101; 20, 21 can be improved.

Both Fig. 6 and Fig. 7 show an additional alarm threshold AL, which can be used to alert the user at time AtL that the ultrasonic transducer may be close to unsatisfactory sensor performance or even sensor failure before reaching the time limit tL, when intersection between the extrapolated gain time curve 42 or 43 or 44 or 45 with the gain threshold value gL represented by the curve 34 occurs. Alternatively or in addition, the additional alarm threshold AL can be used to alert the user at time AtL that the ventilation system may be close to unsatisfactory hygenic and/or fire safety conditions before reaching the time limit tL. The additional alarm threshold AL can also be present in Fig. 5 as a warning, before the limit parameter PL is reached. At the time the alarm threshold AL is reached, the user is informed when cleaning of the ultrasonic sensor 100, 200 and/or ventilation system should be scheduled.

The situation depicted in Fig.7 may occur for example, when use of a zone inside an HVAC system changes over time. The zone may be a commercial or a residential space for example. The zone may be used as an office for a certain number of years. In this case, the accumulation of the dust on the transducers may not be significant. This is represented as a section between the first calculation limit CL1 and the second calculation limit CL2. The extrapolation curve 43 is calculated based on this period, and it shows that the alarm limit AL and the gain limit gL will be reached in a relatively late time, i.e. there is no need for a maintenance in a near future.

The situation may change, if the zone is later used e.g. as a workshop. Due to the change of environment, a rate of dust accumulation may increase significantly, which will produce steeper increase of the applied gain g as a function of time t. This is visible observing a section of the gain time curve g(t) between the second calculation limit CL2 and the third calculation limit CL3 or between the third calculation limit CL3 and the fourth calculation limit CL4. The extrapolation curves 44 or 45 are now calculated based on these periods, and it shows that the alarm limits AL and the gain limits gL will be reached relatively sooner, i.e. there may be need for the maintenance in a nearer future.

The method of diagnosing and the flowmeter assembly and ultrasonic sensor as disclosed herein have the advantage, that maintenance intervals can be optimized, reliability of flow and/or temperature measurement and control can be improved, and better control of and compliance with hygene and fire safety requirements or recommendations of the ventilation system can be achieved.

### Reference Symbols

- 1: flowmeter assembly
- 100, 200: ultrasonic sensor, ultrasonic flow sensor, ultrasonic temperature sensor
- 101, 20, 21: ultrasonic transducer
- 102, 202: signal processing unit, processor
- 103, 203: ultrasonic signal(s)
- 104, 204: raw electronic signal(s)
- 106: amplifier, filter, amplifier and filter
- 107: amplified signal
- 3: conduit section, part of channel
- 30: channel dimension
- 31, 41: signal parameter time curve
- 32: extrapolated curve
- 33: threshold value for limit parameter PL
- 34: threshold value for gain factor limit gL
- 35, AL: threshold value for alarm, alarm limit
- 42, 43, 44, 45: extrapolation curves
- CL1, CL2, CL3, CL4: calculation limits
- f: conduit axial direction, flow direction
- g, gi: gain factor(s)
- gL: gain factor limit
- L: distance between ultrasonic transducers (measured along channel extension)
- P: signal parameter
- PL: limit parameter
- t: time
- tL: time limit for limit parameter, time limit for gain factor limit
- AtL: time limit for alarm
- R: reflection path of ultrasonic signal (continuous or quasi-continuous) or ultrasonic pulses
- RP: reflection point, reflecting area, reflecting surface
- V: V-shaped path
- I: I-shaped path
- Δ: delta-shaped path, triangular path

## Claims

1. A method for predictive maintenance of a system for ventilation, in particular ventilation system or HVAC system, comprising an ultrasonic sensor (100, 200) and/or for predictive maintenance of an ultrasonic flowmeter assembly (1) comprising the ultrasonic sensor (100, 200) configured to be used in the system for ventilation, the ultrasonic sensor (100, 200) comprising: at least one ultrasonic transducer (101; 20, 21) configured to measure ultrasonic signals (103, 203) as a function of time (t) during an operation of the ventilation system and to produce raw electronic signals (104) as a function of time (t), the method comprising the method elements of:
(a) deriving a signal parameter (P) based on the raw electronic signals (104);
(b) creating a set of data (Pi, ti) comprising the signal parameter (P) as a function of time (t);
(c) selecting at least one limit parameter (PL);
(d) estimating a time limit (tL) based on the set of data (Pi, ti), wherein the time limit (tL) is a time when the signal parameter (P) is predicted to reach the limit parameter (PL).

2. The method of claim 1, wherein in step (a) the deriving the signal parameter (P) comprises extracting the signal parameter (P), in particular an amplitude of the raw electronic signal (104), from the raw electronic signals (104) or from electronic signals (107) processed therefrom, in particular amplified and/or filtered electronic signals (107); in particular wherein at least one of the raw electronic signals (104) is obtained as an average over a plurality of measurements, or at least one of the raw electronic signals (104) is obtained by signal processing in the processing unit (102).

3. The method of claim 1 or 2, wherein the ultrasonic signals (103, 203) are emitted by a first ultrasonic transducer (101, 20) and/or by a second ultrasonic transducer (101, 21), and wherein the ultrasonic signals (103, 203) are reflected at least once before being measured by the ultrasonic transducer(s) (101; 20, 21), wherein the ultrasonic signals (103, 203) are transferred via at least two different reflection paths (R; V, I, Δ), in particular wherein the method elements (a)-(d) are performed separately for each of the reflection paths (R; V, I, Δ).

4. The method of any one of the preceding claims, comprising the step of amplifying the raw electronic signals (104) by applying a gain factor (g, gi) to produce amplified electronic signals (107) as a function of time (t), wherein the gain factor (g, gi) is adapted to provide an amplification of the raw electronic signals (104) such that the amplified electronic signals (107) exceed a given minimum threshold value, and wherein the signal parameter (P) is or corresponds to the gain factor (g, gi) and the limit parameter (PL) is or corresponds to a gain factor limit (gL).

5. The method of any one of the preceding claims, wherein the ultrasonic sensor (100, 200) comprises a signal processing unit (102) configured to process the raw electronic signals (104) and/or to amplify the raw electronic signals (104) by applying the gain factor (g, gi) to produce the amplified electronic signals (107) as a function of time (t); in particular wherein the ultrasonic sensor (100, 200) is an ultrasonic sensor (200) for measuring a flow and/or temperature of a fluid through a channel (3).

6. The method of any one of the preceding claims, wherein the limit parameter (PL) is determined such that a required minimum signal to noise ratio of the raw electronic signals (104) is not underrun; and/or wherein the gain factor limit (gL) is determined such that a required minimum signal to noise ratio of the amplified electronic signal (107) is not underrun.

7. The method of any one of the preceding claims, further comprising in step (b) a step of selecting an initial signal parameter (PO) corresponding to a specified or a predetermined value of the raw electronic signal (104), and/or comprising in step (b) a step of selecting an initial gain factor (g0) corresponding to a specified or a predetermined value of the amplified electronic signal (107); in particular wherein: the initial signal parameter (PO) and/or the initial gain factor (g0) is determined during a calibration or start-up procedure, and/or the set of data (Pi, ti) comprises at least two data pairs (Pi, ti).

8. The method of any one of the preceding claims, the method further comprising a step of creating a signal parameter time curve (31, 41) using the set of data (Pi, ti), wherein the signal parameter time curve (31, 41) is obtained by a step of interpolating the set of data (Pi, ti) for example repeatedly or stepwise when the signal parameter (P) reaches a subsequent lower or a subsequent upper calculation limit (CL1, CL2, CL3, CL4); in particular wherein a series of calculation limits (CL1, CL2, CL3, CL4) is selected such that a distance between subsequent calculation limits (CL1, CL2; CL2, CL3; CL3, CL4) is monotonously decreasing, particularly when approaching the limit parameter (PL) and/or an alarm threshold (AL).

9. The method of any one of the preceding claims, the method further comprising a step of creating a signal parameter time curve (31, 41) using the set of data (Pi, ti), comprising a step of extrapolating the signal parameter time curve (31, 41) and determining the time limit (tL) from an intersection between the extrapolated signal parameter time curve (32, 42-45) and a limit parameter threshold value (33, 34), in particular wherein the extrapolation is based on a subset of the set of data (Pi, ti).

10. The method of any one of the preceding claims, the method further comprising the step of setting an alarm threshold (AL) for the signal parameter (P) smaller or larger than the limit parameter (PL) and raising an alarm when the signal parameter (P) reaches the alarm threshold (AL); and/or wherein the limit parameter (PL) and/or the alarm threshold (AL) is determined such that a threshold amplitude of the raw electronic signals (104), which is indicative of a maximal allowable dirt accumulation in the system for ventilation, is not underrun; and/or wherein the gain factor limit (gL) and/or the alarm threshold (AL) is determined such that a threshold amplitude of the amplified electronic signals (107), which is indicative of a maximal allowable dirt accumulation in the system of ventilation, is not underrun.

11. The method of claim 10, wherein the maximal allowable dirt accumulation in the system of ventilation is chosen according to hygenic requirements, and the limit parameter is a hygenic limit parameter and/or the alarm threshold is a hygenic alarm threshold; and/or wherein the maximal allowable dirt accumulation in the system of ventilation is chosen according to fire safety requirements, and the limit parameter is a fire safety limit parameter and/or the alarm threshold is a fire safety alarm threshold.

12. The method of any one of the preceding claims, wherein the method serves for detecting malfunctioning of the ultrasonic sensor (100, 200), in particular signal fading due to accumulation of dust or debris on the ultrasonic transducer (101; 20, 21) and/or on at least one reflection point (RP) or reflection surface (RP) of the conduit (3).

13. The method of any one of the preceding claims, wherein the ultrasonic signals (103) from the ultrasonic transducers (101; 20, 21) providing reduced raw sensor signals (104) or requiring increased gain factors (g, gi) compared to other ultrasonic transducers are used with less weight or are neglected, e.g. when determining the flow and/or temperature of the fluid through the channel (3); and/or wherein the ultrasonic sensor (100, 200) comprises at least two ultrasonic transducers (20, 21) that are fixed to a channel section (3) and are arranged at a distance (L) from each other along the channel section (3), in particular wherein the channel section (3) comprises at least one reflector (RP) for providing a reflection path (R; V, I, Δ) for one or between two of the ultrasonic transducers (20, 21).

14. A sensor (100, 200) comprising:
an ultrasonic transducer (101; 20, 21) configured to measure ultrasonic signals (103) as a function of time (t) and to produce a raw electronic signals (104) as a function of time (t); and
a signal processing unit (102) configured to process the raw electronic signals (104) and/or to amplify the electronic signals (104) by applying a gain factor (g, gi) to produce amplified electronic signals (107) as a function of time (t),
wherein the sensor (100, 200) is configured to perform the method for predictive maintenance of any one of the preceding claims.

15. A computer program product comprising instructions which, when the program is executed by a computer, cause the computer to carry out the steps of the method of any one of the claims 1 to 13.

## Patentansprüche

1. Verfahren zur prädiktiven Wartung eines Systems zur Lüftung, insbesondere eines Lüftungssystems oder HVAC Systems, umfassend einen Ultraschallsensor (100, 200), und/oder zur prädiktiven Wartung einer Ultraschall-Durchflussmessanordnung (1), umfassend den Ultraschallsensor (100, 200), der zur Verwendung in dem System zur Lüftung eingerichtet ist, wobei der Ultraschallsensor (100, 200) umfasst: mindestens einen Ultraschallwandler (101; 20, 21), der eingerichtet ist zum Messen von Ultraschallsignalen (103, 203) als Funktion der Zeit (t) während eines Betriebs des Lüftungssystems und zum Erzeugen von unverarbeiteten elektronischen Signalen (104) als Funktion der Zeit (t), wobei das Verfahren die folgenden Verfahrenselemente umfasst:
(a) Ableiten eines Signalparameters (P) basierend auf den unverarbeiteten elektronischen Signalen (104);
(b) Erzeugen eines Datensatzes (Pi, ti), umfassend den Signalparameter (P) als Funktion der Zeit (t);
(c) Auswählen mindestens eines Grenzparameters (PL);
(d) Schätzen eines Zeitlimits (tL) basierend auf dem Datensatz (Pi, ti), wobei das Zeitlimit (tL) ein Zeitpunkt ist, zu dem der Signalparameter (P) prognostiziert ist, den Grenzparameter (PL) zu erreichen.

2. Verfahren nach Anspruch 1, wobei in Schritt (a) das Ableiten des Signalparameters (P) das Extrahieren des Signalparameters (P), insbesondere einer Amplitude des unverarbeiteten elektronischen Signals (104), aus den unverarbeiteten elektronischen Signalen (104) oder aus daraus verarbeiteten elektronischen Signalen (107), insbesondere verstärkten und/oder gefilterten elektronischen Signalen (107), umfasst; insbesondere wobei mindestens eines der unverarbeiteten elektronischen Signale (104) als Mittelwert über eine Vielzahl von Messungen erhalten wird, oder mindestens eines der unverarbeiteten elektronischen Signale (104) durch Signalverarbeitung in der Verarbeitungseinheit (102) erhalten wird.

3. Verfahren nach Anspruch 1 oder 2, wobei die Ultraschallsignale (103, 203) von einem ersten Ultraschallwandler (101, 20) und/oder von einem zweiten Ultraschallwandler (101, 21) emittiert werden, und wobei die Ultraschallsignale (103, 203) mindestens einmal reflektiert werden, bevor sie von dem oder den Ultraschallwandler(n) (101, 20, 21) gemessen werden, wobei die Ultraschallsignale (103, 203) über mindestens zwei verschiedene Reflexionspfade (R; V, I, Δ) übertragen werden, insbesondere wobei die Verfahrenselemente (a)-(d) für jeden der Reflexionspfade (R; V, I, Δ) separat durchgeführt werden.

4. Verfahren nach einem der vorhergehenden Ansprüche, umfassend einen Schritt des Verstärkens der unverarbeiteten elektronischen Signale (104) durch Anwenden eines Verstärkungsfaktors (g, gi), um verstärkte elektronische Signale (107) als eine Funktion der Zeit (t) zu erzeugen, wobei der Verstärkungsfaktor (g, gi) angepasst ist, eine Verstärkung der unverarbeiteten elektronischen Signale (104) bereitzustellen, so dass die verstärkten elektronischen Signale (107) einen gegebenen minimalen Schwellenwert überschreiten, und wobei der Signalparameter (P) der Verstärkungsfaktor (g, gi) ist oder diesem entspricht und der Grenzparameter (PL) eine Verstärkungsfaktorgrenze (gL) ist oder dieser entspricht.

5. Verfahren nach einem der vorhergehenden Ansprüche, wobei der Ultraschallsensor (100, 200) eine Signalverarbeitungseinheit (102) umfasst, die eingerichtet ist, die unverarbeiteten elektronischen Signale (104) zu verarbeiten und/oder die unverarbeiteten elektronischen Signale (104) durch Anwendung des Verstärkungsfaktors (g, gi) zu verstärken, um die verstärkten elektronischen Signale (107) als eine Funktion der Zeit (t) zu erzeugen; insbesondere wobei der Ultraschallsensor (100, 200) ein Ultraschallsensor (200) zum Messen eines Flusses und/oder einer Temperatur eines Fluids durch einen Kanal (3) ist.

6. Verfahren nach einem der vorhergehenden Ansprüche, wobei der Grenzparameter (PL) so bestimmt wird, dass ein erforderliches minimales Signal-Rausch-Verhältnis der unverarbeiteten elektronischen Signale (104) nicht unterschritten wird; und/oder wobei die Verstärkungsfaktorgrenze (gL) so bestimmt wird, dass ein erforderliches minimales Signal-Rausch-Verhältnis des verstärkten elektronischen Signals (107) nicht unterschritten wird.

7. Verfahren nach einem der vorhergehenden Ansprüche, das ferner in Schritt (b) einen Schritt der Auswahl eines Anfangssignalparameters (P0) umfasst, der einem bestimmten oder einem vorgegebenen Wert des unverarbeiteten elektronischen Signals (104) entspricht, und/oder das in Schritt (b) einen Schritt der Auswahl eines Anfangsverstärkungsfaktors (g0) umfasst, der einem bestimmten oder einem vorgegebenen Wert des verstärkten elektronischen Signals (107) entspricht; insbesondere wobei: der Anfangssignalparameter (P0) und/oder der Anfangsverstärkungsfaktor (g0) während einer Kalibrierungs- oder Startprozedur bestimmt wird, und/oder der Datensatz (Pi, ti) mindestens zwei Datenpaare (Pi, ti) umfasst.

8. Verfahren nach einem der vorhergehenden Ansprüche, wobei das Verfahren ferner einen Schritt des Erstellens einer Signalparameter-Zeitkurve (31, 41) unter Verwendung des Datensatzes (Pi, ti) umfasst, wobei die Signalparameter-Zeitkurve (31, 41) durch einen Schritt der Interpolation des Datensatzes (Pi, ti) beispielsweise wiederholt oder schrittweise erhalten wird, wenn der Signalparameter (P) eine nachfolgende untere oder eine nachfolgende obere Berechnungsgrenze (CL1, CL2, CL3, CL4) erreicht; wobei insbesondere eine Reihe von Berechnungsgrenzen (CL1, CL2, CL3, CL4) so gewählt wird, dass ein Abstand zwischen aufeinanderfolgenden Berechnungsgrenzen (CL1, CL2; CL2, CL3; CL3, CL4) monoton abnimmt, insbesondere bei Annäherung an den Grenzparameter (PL) und/oder an einen Alarmschwellenwert (AL).

9. Verfahren nach einem der vorhergehenden Ansprüche, wobei das Verfahren ferner einen Schritt des Erstellens einer Signalparameter-Zeitkurve (31, 41) unter Verwendung des Datensatzes (Pi, ti) umfasst, der einen Schritt des Extrapolierens der Signalparameter-Zeitkurve (31, 41) und des Bestimmens der Zeitgrenze (tL) aus einem Schnittpunkt zwischen der extrapolierten Signalparameter-Zeitkurve (32, 42-45) und einem Grenzparameter-Schwellenwert (33, 34) umfasst, insbesondere wobei die Extrapolation auf einer Teilmenge des Datensatzes (Pi, ti) basiert.

10. Verfahren nach einem der vorhergehenden Ansprüche, wobei das Verfahren ferner einen Schritt des Einstellens eines Alarmschwellenwerts (AL) für den Signalparameter (P) umfasst, die kleiner oder größer als der Grenzparameter (PL) ist, und Auslösen eines Alarms, wenn der Signalparameter (P) den Alarmschwellenwert (AL) erreicht; und/oder wobei der Grenzparameter (PL) und/oder der Alarmschwellenwert (AL) so bestimmt wird, dass eine Schwellenamplitude der unverarbeiteten elektronischen Signale (104), die einer maximal zulässigen Schmutzansammlung in dem System zur Lüftung zugeordnet ist, nicht unterschritten wird; und/oder wobei die Verstärkungsfaktorgrenze (gL) und/oder der Alarmschwellenwert (AL) so bestimmt wird, dass eine Schwellenamplitude der verstärkten elektronischen Signale (107), die einer maximal zulässigen Schmutzansammlung in dem System zur Lüftung zugeordnet ist, nicht unterschritten wird.

11. Verfahren nach Anspruch 10, wobei die maximal zulässige Schmutzansammlung in dem System zur Lüftung gemäß hygienischen Anforderungen gewählt wird und der Grenzparameter ein hygienischer Grenzparameter und/oder der Alarmschwellenwert ein hygienischer Alarmschwellenwert ist; und/oder wobei die maximal zulässige Schmutzansammlung in dem System zur Lüftung gemäß Brandschutzanforderungen gewählt wird und der Grenzparameter ein Brandschutzgrenzparameter und/oder der Alarmschwellenwert ein Brandschutzalarmschwellenwert ist.

12. Verfahren nach einem der vorhergehenden Ansprüche, wobei das Verfahren zur Erkennung einer Fehlfunktion des Ultraschallsensors (100, 200) dient, insbesondere einer Signalabschwächung aufgrund von Staub- oder Schmutzansammlungen auf dem Ultraschallwandler (101; 20, 21) und/oder auf mindestens einem Reflexionspunkt (RP) oder einer Reflexionsfläche (RP) der Leitung (3).

13. Verfahren nach einem der vorhergehenden Ansprüche, bei dem die Ultraschallsignale (103) der Ultraschallwandler (101; 20, 21), die reduzierte unverarbeitete Sensorsignale (104) bereitstellen oder erhöhte Verstärkungsfaktoren (g, gi) benötigen, im Vergleich zu anderen Ultraschallsensoren mit geringerem Gewicht verwendet oder vernachlässigt werden, z.B. beim Bestimmen des Flusses und/oder der Temperatur des Fluids durch den Kanal (3); und/oder wobei der Ultraschallsensor (100, 200) mindestens zwei Ultraschallwandler (20, 21) umfasst, die an einem Kanalabschnitt (3) befestigt und in einem Abstand (L) voneinander entlang des Kanalabschnitts (3) angeordnet sind, insbesondere wobei der Kanalabschnitt (3) mindestens einen Reflektor (RP) umfasst, um einen Reflexionsweg (R; V, I, Δ) für einen oder zwischen zwei der Ultraschallwandler (20, 21) bereitzustellen.

14. Ein Sensor (100, 200), umfassend:
einen Ultraschallwandler (101; 20, 21), der eingerichtet ist, Ultraschallsignalen (103) als Funktion der Zeit (t) zu messen und ein unverarbeitetes elektronisches Signals (104) als Funktion der Zeit (t) bereitzustellen; und
eine Signalverarbeitungseinheit (102), die eingerichtet ist, die unverarbeiteten elektronischen Signale (104) zu verarbeiten und/oder die elektronischen Signale (104) durch Anwendung eines Verstärkungsfaktors (g, gi) zu verstärken, um verstärkte elektronische Signale (107) als eine Funktion der Zeit (t) zu erzeugen,
wobei der Sensor (100, 200) eingerichtet ist, das Verfahren zur prädikativen Wartung nach einem der vorhergehenden Ansprüche durchzuführen.

15. Computerprogrammprodukt, das Anweisungen umfasst, die, wenn das Programm von einem Computer ausgeführt wird, den Computer veranlassen, die Schritte des Verfahrens nach einem der Ansprüche 1 bis 13 auszuführen.

## Revendications

1. Procédé de maintenance prédictive d'un système pour ventilation, en particulier d'un système de ventilation ou d'un système CVC, comprenant un capteur à ultrasons (100, 200) et/ou de maintenance prédictive d'un ensemble débitmètre à ultrasons (1) comprenant le capteur à ultrasons (100, 200) configuré pour être utilisé dans le système pour ventilation, le capteur à ultrasons (100, 200) comprenant : au moins un transducteur à ultrasons (101 ; 20, 21) configuré pour mesurer des signaux ultrasonores (103, 203) en fonction du temps (t) pendant le fonctionnement du système de ventilation et pour produire des signaux électroniques non traités (104) en fonction du temps (t), le procédé comprenant les éléments suivants :
(a) dériver un paramètre de signal (P) sur la base des signaux électroniques non traités (104) ;
(b) créer un ensemble de données (Pi, ti) comprenant le paramètre de signal (P) en fonction du temps (t) ;
(c) sélectionner au moins un paramètre limite (PL) ;
(d) estimer une limite de temps (tL) sur la base de l'ensemble de données (Pi, ti), dans laquelle la limite de temps (tL) est un moment où le paramètre de signal (P) est prévu d'atteindre le paramètre limite (PL).

2. Procédé selon la revendication 1, dans lequel, à l'étape (a), la dérivation du paramètre de signal (P) comprend l'extraction du paramètre de signal (P), en particulier une amplitude du signal électronique non traité (104), à partir des signaux électroniques non traités (104) ou à partir de signaux électroniques (107) traités à partir de ceux-ci, en particulier des signaux électroniques amplifiés et/ou filtrés (107) ; en particulier dans laquelle au moins l'un des signaux électroniques non traités (104) est obtenu comme moyenne sur une pluralité de mesures, ou au moins l'un des signaux électroniques non traités (104) est obtenu par traitement du signal dans l'unité de traitement du signal (102).

3. Procédé selon la revendication 1 ou 2, dans laquelle les signaux ultrasonores (103, 203) sont émis par un premier transducteur ultrasonore (101, 20) et/ou par un deuxième transducteur ultrasonore (101, 21), et dans laquelle les signaux ultrasonores (103, 203) sont réfléchis au moins une fois avant d'être mesurés par le transducteur(s) ultrasonores (101 ; 20, 21), dans laquelle les signaux d'ultrasons (103, 203) sont transférés via au moins deux trajets de réflexion différents (R ; V, I, Δ), en particulier dans laquelle les éléments du procédé (a) à (d) sont effectués séparément pour chacun des trajets de réflexion (R ; V, I, Δ).

4. Procédé selon l'une des revendications précédentes, comprenant l'étape consistant à amplifier les signaux électroniques non traités (104) en appliquant un facteur de gain (g, gi) afin de produire des signaux électroniques amplifiés (107) en fonction du temps (t), dans laquelle le facteur de gain (g, gi) est adapté pour fournir une amplification des signaux électroniques non traités (104) de telle sorte que les signaux électroniques amplifiés (107) dépassent une valeur seuil minimale donnée, et dans laquelle le paramètre de signal (P) est ou correspond au facteur de gain (g, gi) et le paramètre limite (PL) est ou correspond à une limite du facteur de gain (gL).

5. Procédé selon l'une des revendications précédentes, dans lequel le capteur à ultrasons (100, 200) comprend une unité de traitement du signal (102) configurée pour traiter les signaux électroniques non traités (104) et/ou pour amplifier les signaux électroniques non traités (104) en appliquant le facteur de gain (g, gi) afin de produire les signaux électroniques amplifiés (107) en fonction du temps (t) ; en particulier dans laquelle le capteur à ultrasons (100, 200) est un capteur à ultrasons (200) destiné à mesurer un débit et/ou une température d'un fluide à travers un canal (3).

6. Procédé selon l'une des revendications précédentes, dans lequel le paramètre limite (PL) est déterminé de telle sorte qu'un rapport signal/bruit minimum requis des signaux électroniques non traités (104) ne soit pas dépassé ; et/ou dans laquelle la limite du facteur de gain (gL) est déterminée de telle sorte qu'un rapport signal/bruit minimum requis du signal amplifié (107) ne soit pas dépassé.

7. Procédé selon l'une des revendications précédentes, comprenant en outre, à l'étape (b), une étape consistant à sélectionner un paramètre de signal initial (PO) correspondant à une valeur spécifiée ou prédéterminée du signal électronique non traité (104), et/ou comprenant, à l'étape (b), une étape consistant à sélectionner un facteur de gain initial (g0) correspondant à une valeur spécifiée ou prédéterminée du signal électronique amplifié (107) ; en particulier dans laquelle: le paramètre de signal initial (P0) et/ou le facteur de gain initial (g0) est déterminé(e) pendant une procédure d'étalonnage ou de démarrage, et/ou l'ensemble de données (Pi, ti) comprend au moins deux paires de données (Pi, ti).

8. Procédé selon l'une des revendications précédentes, le procédé comprenant en outre une étape consistant à créer une courbe du paramètre du signal en fonction du temps (31, 41) à l'aide de l'ensemble de données (Pi, ti), dans laquelle la courbe du paramètre du signal en fonction du temps (31, 41) est obtenue par une étape d'interpolation de l'ensemble de données (Pi, ti), par exemple de manière répétée ou par étapes, lorsque le paramètre du signal (P) atteint une limite de calcul inférieure ou supérieure suivante (CL1, CL2, CL3, CL4); en particulier dans lequel une série de limites de calcul (CL1, CL2, CL3, CL4) est sélectionnée de telle sorte qu'une distance entre des limites de calcul suivantes (CL1, CL2 ; CL2, CL3 ; CL3, CL4) diminue de manière monotone, en particulier lorsqu'on s'approche du paramètre limite (PL) et/ou d'un seuil d'alarme (AL).

9. Procédé selon l'une des revendications précédentes, le procédé comprenant en outre une étape consistant à créer une courbe du paramètre du signal en fonction du temps (31, 41) à l'aide de l'ensemble de données (Pi, ti), comprenant une étape consistant à extrapoler la courbe du paramètre du signal en fonction du temps (31, 41) et à déterminer la limite temporelle (tL) à partir d'une intersection entre la courbe du paramètre du signal extrapolée (32, 42-45) et une valeur seuil de paramètre limite (33, 34), en particulier dans laquelle l'extrapolation est basée sur un sous-ensemble de l'ensemble de données (Pi, ti).

10. Procédé selon l'une des revendications précédentes, le procédé comprenant en outre l'étape consistant à définir un seuil d'alarme (AL) pour le paramètre de signal (P) inférieur ou supérieur au paramètre limite (PL) et à déclencher une alarme lorsque le paramètre de signal (P) atteint le seuil d'alarme (AL) ; et/ou dans laquelle le paramètre limite (PL) et/ou le seuil d'alarme (AL) sont déterminés de telle sorte qu'une amplitude de seuil des signaux électroniques non traités (104), qui est indicative d'une accumulation maximale admissible de saleté dans le système pour ventilation, ne soit pas dépassée; et/ou dans laquelle la limite du facteur de gain (gL) et/ou le seuil d'alarme (AL) sont déterminés de telle sorte qu'une amplitude seuil des signaux électroniques amplifiés (107), qui est indicative d'une accumulation maximale admissible de saleté dans le système pour ventilation, ne soit pas dépassée.

11. Procédé selon la revendication 10, dans laquelle l'accumulation maximale admissible de saleté dans le système pour ventilation est choisie en fonction d'exigences hygiéniques, et le paramètre limite est un paramètre limite hygiénique et/ou le seuil d'alarme est un seuil d'alarme hygiénique; et/ou dans laquelle l'accumulation maximale admissible de saleté dans le système pour ventilation est choisie en fonction d'exigences de sécurité incendie, et le paramètre limite est un paramètre limite de sécurité incendie et/ou le seuil d'alarme est un seuil d'alarme de sécurité incendie.

12. Procédé selon l'une des revendications précédentes, dans laquelle le procédé sert à détecter un dysfonctionnement du capteur à ultrasons (100, 200), en particulier une atténuation du signal due à une accumulation de poussière ou de débris sur le transducteur à ultrasons (101 ; 20, 21) et/ou sur au moins un point de réflexion (RP) ou une surface de réflexion (RP) du conduit (3).

13. Procédé selon l'une des revendications précédentes, dans laquelle les signaux ultrasonores (103) provenant des transducteurs ultrasonores (101 ; 20, 21) fournissant des signaux bruts de capteur réduits (104) ou nécessitant des facteurs de gain accrus (g, gi) par rapport à d'autres transducteurs à ultrasons sont utilisés avec moins de poids ou sont négligés, par exemple lors de la détermination du débit et/ou de la température du fluide à travers le canal (3); et/ou dans lequel le capteur à ultrasons (100, 200) comprend au moins deux transducteurs à ultrasons (20, 21) qui sont fixés à une section de canal (3) et sont arrangés à une distance (L) l'un de l'autre le long de la section de canal (3), en particulier dans lequel la section de canal (3) comprend au moins un réflecteur (RP) pour fournir un trajet de réflexion (R ; V, I, Δ) pour un ou entre deux des transducteurs à ultrasons (20, 21).

14. Capteur (100, 200) comprenant :
un transducteur d'ultrasons (101; 20, 21) configuré pour mesurer des signaux d'ultrasons (103) en fonction du temps (t) et pour produire des signaux électroniques non traités (104) en fonction du temps (t); et
une unité de traitement du signal (102) configurée pour traiter les signaux électroniques non traités (104) et/ou amplifier les signaux électroniques (104) en appliquant un facteur de gain (g, gi) afin de produire des signaux électroniques amplifiés (107) en fonction du temps (t),
dans lequel le capteur (100, 200) est configuré pour effectuer le procédé de maintenance prédictive de l'une des revendications précédentes.

15. Produit programme d'ordinateur comprenant des instructions qui, lorsque le programme est exécuté par un ordinateur, amènent l'ordinateur à exécuter les étapes du procédé selon l'une quelconque des revendications 1 à 13.
